# EUROPÄISCHE PATENTSCHRIFT

(11) **EP 1 340 697 B1**
(45) Veröffentlichungstag und Bekanntmachung des Hinweises auf die Patenterteilung: **19.11.2003**
(21) Anmeldenummer: 01124017.3
(22) Anmeldetag: 09.10.2001
(51) Int. Cl.: B65G 1/14

(54) **Stapelsäule zum Lagern oder Transportieren von Lagergütern**
Storage or transport rack for articles
Colonne de stockage ou de transport pour articles

(43) Veröffentlichungstag der Anmeldung: 03.09.2003
(73) Patentinhaber: Weidner, Wolfgang, 85084 Reichertshofen (DE); Weidner, Klaus, 85051 Ingolstadt (DE)
(72) Erfinder: Weichselbaumer, Wolfgang, 85123 Karlskron (DE)
(74) Vertreter: Richter, Thomas, Dr.rer.nat.

(56) Entgegenhaltungen:
- DE-A- 19 641 270
- US-A- 5 005 712

## Beschreibung

Die Erfindung bezieht sich auf eine Stapelsäule zum Lagern oder Transportieren von Lagergütern mit einer Seitenwand und Klinkenhebeln, wobei an den Klinkenhebeln angeordnete Querbolzen in in der Seitenwand vorgesehene und die möglichen Schwenkbewegungen der Klinkenhebel begrenzende Kulissen eingreifen.

Stapelsäulen sind seit langem bekannt und sie sind aus der Serienfertigung nicht mehr wegzudenken. Verwendet werden Stapelsäulen vor allem bei der Herstellung von Karosserieteilen in der Automobilindustrie, und zwar einzeln oder zu mehreren in horizontaler, vertikaler oder in einem beliebigen Zwischenwinkel gerichteter Ausrichtung in Vorrichtungen bzw. Behältern, in denen beispielsweise Karosseriebleche oder andere Lagergüter gelagert oder transportiert werden. Jede Stapelsäule besitzt eine Vielzahl von Klinkenhebeln, von denen sich im unbefüllten Zustand ein erster in Bereitschaftsstellung befindet. Wird ein Lagergut auf diesen Klinkenhebel aufgelegt, schwenkt der Klinkenhebel in Arbeitsstellung und nimmt dabei einen nachfolgenden Klinkenhebel mit, der auf diese Weise in Bereitschaftsstellung gelangt, während die dann folgenden Klinkenhebel in Ihren Ruhestellungen verbleiben. Dieser Vorgang setzt sich bei jedem weiteren Verschwenken eines in Bereitschaftsstellung befindlichen Klinkenhebels in die Arbeitsstellung fort, bis die Stapelsäule vollständig gefüllt ist.

Eine Stapelsäule der eingangs erwähnten Art ist aus der DE 196 41 270 A1 bekannt. Nachteilig ist bei dieser Ausführungsform, daß die Klinkenhebel in der Arbeitsstellung nur durch das Gewicht des aufgelegten Lagergutes gehalten werden, also beispielsweise beim Transport durch Stöße oder dergleichen sich anheben können, so daß das Lagergut verrutschen und dabei beschädigt werden kann.

Aus der EP 0 890 531 A1 ist eine Stapelsäule bekannt, deren Klinkenhebel in ihrer Arbeitsstellung festlegbar sind, indem die Klinkenhebel in Arbeitsstellung mit einem den Tragarmen gegenüberliegenden Schwenkteil in eine Rasteinrichtung einfahren, die einen Schwenkhebel aufweist, der mit einer Stimkante in Raststellung von einem Anschlag einen Abstand einhält, in dem das Schwenkteil des Klinkenhebels aufgenommen ist. Diese Stapelsäule weist gegenüber herkömmlichen Ausführungen also zusätzliche Teile auf, die einen Mehraufwand bei der Herstellung der Stapelsäule darstellen und deren Funktion in der Praxis durch rauhe Behandlung, Verschmutzung und dergleichen beeinträchtigt werden kann.

Die EP 0 940 355 A1 beschreibt ebenfalls eine Stapelsäule mit festlegbaren Klinkenhebeln, bei der zum Festlegen der Klinkenhebel in Arbeitsstellung einzeln auslösbare Verriegelungsbolzen, die die Klinkenhebel einzeln in ihrer Arbeitsstellung arretieren, vorgesehen sind. Auch hier sind also zusätzlich Bauteile erforderlich, die wiederum zu den oben erwähnten Nachteilen führen.

Demgegenüber ist die Aufgabe der vorliegenden Erfindung darin zu sehen, eine Stapelsäule anzugeben, deren Klinkenhebel auf einfache und funktionssichere Weise einzeln verriegelt werden können.

Gelöst wird diese Aufgabe mit den Merkmalen des Anspruchs 1. Der zusammen mit der Kulisse zur Begrenzung der Schwenkbewegung des Klinkenhebels dienende Querbolzen wird dabei in vorteilhafter Weise gleichzeitig zur Verriegelung jedes einzelnen Klinkenhebels in Arbeitsstellung genutzt, indem der Querbolzen unter einer Vorspannkraft stehend in die Hinterschneidung an dem der Arbeitsstellung des Klinkenhebels entsprechenden Ende der Kulisse eingreift. Damit wird ein Verriegelungsmechanismus für jeden einzelnen Klinkenhebel bei praktisch nicht vorhandenem baulichen Mehraufwand erreicht, so daß die Verriegelung auch dann wirksam ist, wenn der die Stapelsäule enthaltende Behälter nicht vollständig gefüllt ist. Gerade bei horizontaler Verwendung der Stapelsäule zum Lagern oder Transportieren von Teilen mit starker Hinterschneidung, die wegen der Lage ihres Schwerpunktes aus der Lagerstellung zurückklappen können, aber auch in allen anderen Einbaulagen der Stapelsäule kommen die Vorteile der Erfindung zur Geltung.

Die in Arbeitsstellung wirkende Vorspannkraft des Querbolzens kann beispielsweise durch die Gewichtskraft des Querbolzens erzeugt sein.

Daneben ist es jedoch vorteilhaft, wenn die Vorspannkraft des Querbolzens von einer Feder erzeugt ist. Dadurch ist zur Bewegung jedes Klinkenhebels von der Bereitschafts- in die Arbeitsstellung eine konstante Kraft erforderlich, weil die Vorspannkraft während des gesamten Bewegungsvorgangs nahezu gleichmäßig wirkt. Außerdem ist die Verriegelung der Klinkenhebel in der Arbeitsstellung unabhängig von der Einbaulage der Stapelsäule, was besonders dann günstig ist, wenn auch die Klinkenhebel selbst unter einer Federkraft stehend in Richtung der Ruhestellung vorgespannt sind.

Nach einer vorteilhaften Ausgestaltung der Erfindung sind zur Steuerung der Klinkenhebel Zuglaschen vorgesehen und der Querbolzen ist gleichzeitig als Zuglaschenbolzen ausgebildet, wodurch eine weitere Vereinfachung der Konstruktion der Stapelsäule erreicht wird.

Darüber hinaus ist es vorteilhaft, wenn ein verschiebbares Riegelblech vorgsehen ist, das die Kontur der Kulisse zumindest in dem die Hinterschneidung aufweisenden Endbereich ergänzt. Durch Verschieben des Riegelblechs können dann alle Klinkenhebel gleichzeitig entriegelt werden, indem das Riegelblech die Kontur der Kulisse so ergänzt, daß beim Verschieben alle Querbolzen der Klinkenhebel gemeinsam aus der Hinterschneidung herausgedrückt werden. Sobald das Lagergut dann entfernt wird, kann der jeweilige Klinkenhebel von der Arbeitsstellung in seine Bereitschaftsstellung zurückschwenken, wobei der bei der Entnahme vorangehende Klinkenhebel in die Ruhestellung schwenkt, und der nächste Klinkenhebel ist zur Entnahme des Lagergutes bereit.

Weitere Einzelheiten und Vorteile der Erfindung ergeben sich aus der nachfolgend beschriebenen Zeichnung. Es zeigen:
- Fig. 1: eine Seitenansicht einer Stapelsäule ohne Lagergüter,
- Fig. 2: eine Seitenansicht der Stapelsäule, die vollständig mit Lagergütern gefüllt und verriegelt ist,
- Fig. 3: einen Schnitt entlang der Linie III-III der Fig. 2 und
- Fig. 4: eine Seitenansicht der Stapelsäule, die entriegelt und teilweise geleert ist.

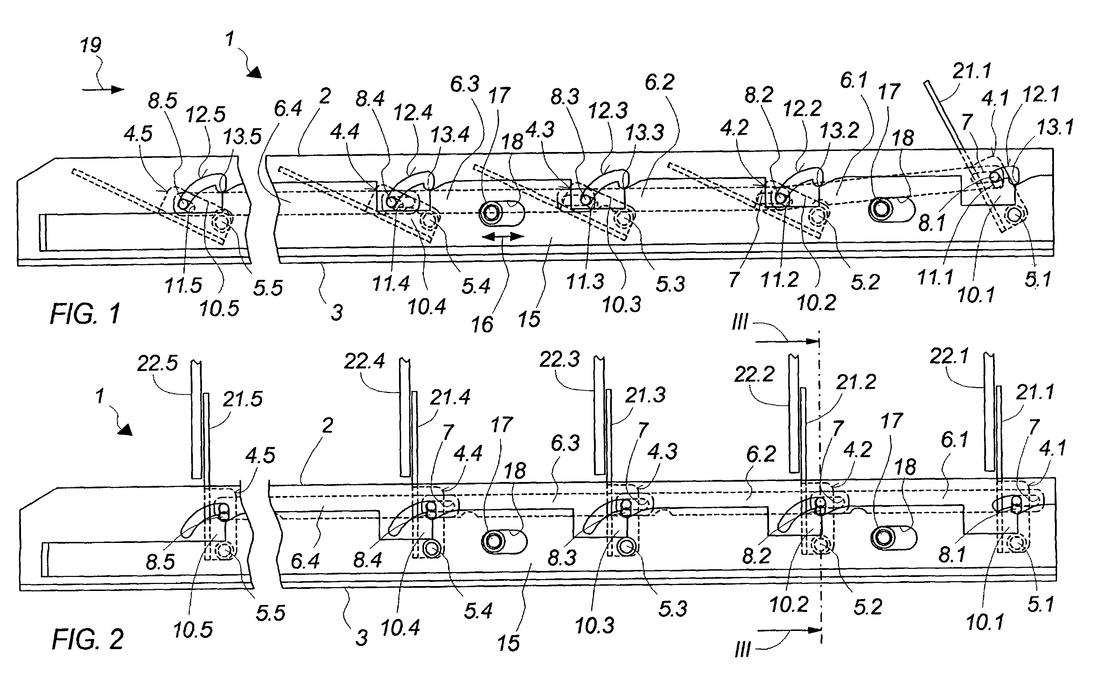

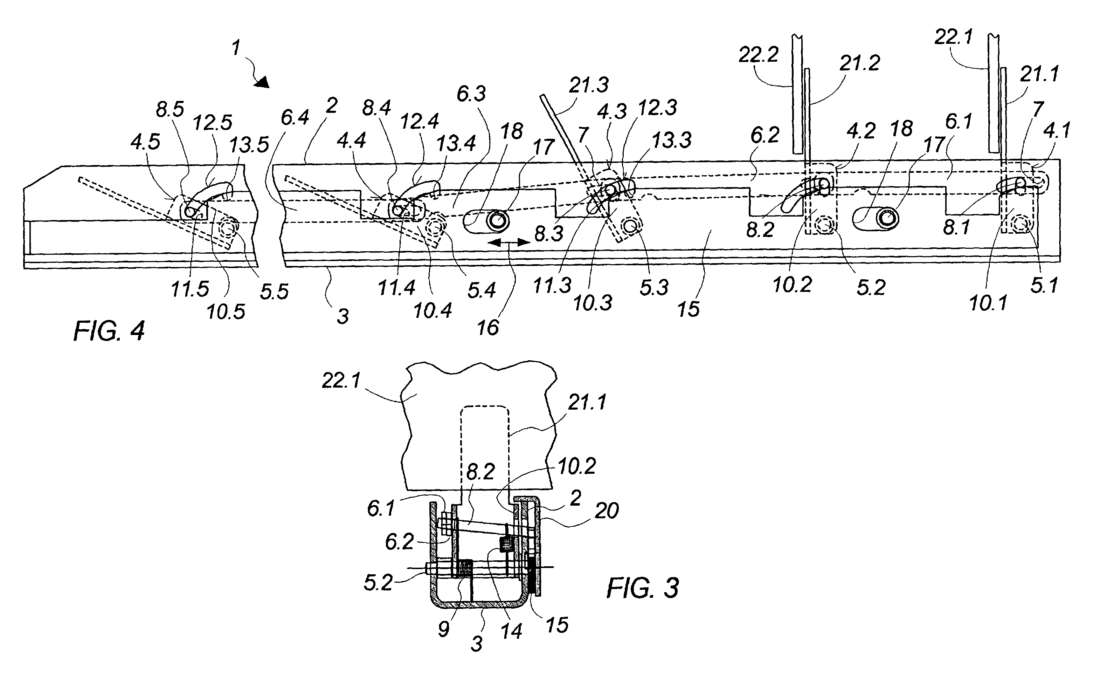

Die in den Fig. 1 bis 4 dargestellte Stapelsäule 1 besitzt eine Seitenwand 2, die Teil einer in Fig. 3 erkennbaren U-förmigen Schiene 3 ist. In der U-förmigen Schiene 3 sind Klinkenhebel 4.1, 4.2, 4.3, 4.4 und 4.5 auf Querachsen 5.1, 5.2, 5.3, 5.4 und 5.5 schwenkbar gelagert. Die Stapelsäule kann beispielsweise in der gezeichneten horizontalen Ausrichtung einzeln oder zu mehreren in einem nicht dargestellten Transportbehälter für Karosserieteile oder andere Lagergüter eingebaut sein. Daneben ist auch eine vertikale oder in beliebigem Winkel erfolgende Ausrichtung möglich.

Die Steuerung der Klinkenhebel 4.1 bis 4.5 erfolgt in bekannter Weise über Zuglaschen 6.1, 6.2, 6.3 und 6.4 mit Langlöchem 7 an ihren jeweiligen Enden, in die an den Klinkenhebeln 4.1 bis 4.5 angeordnete Querbolzen 8.1, 8.2, 8.3, 8.4 und 8.5 derart eingreifen, daß beim Verbringen eines Klinkenhebels in eine aus der Stapelsäule herausragende Arbeitsstellung der jeweils folgende Klinkenhebel in Bereitschaftsstellung gelangt, während die dann folgenden Tragarme der Klinkenhebel in ihren innerhalb der Stapelsäule befindlichen Ruhestellungen verbleiben. Dabei stehen die Klinkenhebel 4.1 bis 4.5 unter der in Richtung der Ruhestellung wirkenden Vorspannkraft einer aus Gründen der Übersichtlichkeit nur in Fig. 3 dargestellten Feder 9.

Die Querbolzen 8.1 bis 8.5 sind in den Seitenwangen 10.1 bis 10.5 der Klinkenhebel 4.1 bis 4.5 angeordnet, wobei die Querbolzen 8.1 bis 8.5 mit ihren den Zuglaschen 6.1 bis 6.4 gegenüberliegenden Enden durch eine in der Seitenwange 10.1 bis 10.5 vorgesehene langlochförmie Aussparung 11.1 bis 11.5 hindurch in Kulissen 12.1 bis 12.5 eingreifen. Die Kulissen 12.1 bis 12.5 begrenzen die möglichen Schwenkbewegungen der Klinkenhebel 4.1 bis 4.5. Darüber hinaus weisen die Kulissen 12.1 bis 12.5 an dem der Arbeitsstellung des Klinkenhebls entsprechenden Ende eine Hinterschneidung 13.1 bis 13.5 auf, in die die Querbolzen 8.1 bis 8.5 in der Arbeitsstellung der Klinkenhebel 4.1 bis 4.5 eingreifen. Dazu stehen die Querbolzen 8.1 bis 8.5 unter der Vorspannkraft einer in Fig. 3 dargestellten Feder 14.

An der Seitenwand 2 ist ein Riegelblech 15 in Richtung des Doppelpfeiles 16 verschiebbar angebracht, indem an der Seitenwand 2 befestigte Bolzen 17 in langlochförmige Aussparungen 18 in dem Riegelblech 15 eingreifen. Das Riegelblech 15 weist dabei eine Gestaltung auf, die die Kontur der Kulissen 12.1 bis 12.5 zumindet in dem Bereich der Hinterschneidungen 13.1 bis 13.5 ergänzt, wie dies weiter unten genauer beschrieben ist. Zum Befüllen der Stapelsäule 1 befindet sich das Riegelblech 15 in der in den Fig. 1 bis 3 dargestellten Verriegelungsposition, die die Hinterschneidungen 13.1 bis 13.5 der Kulissen 12.1 bis 12.5 freigibt.

In Fig. 1 ist die leere Stapelsäule 1 ohne Lagergüter dargestellt. Der erste Klinkenhebel 4.1 befindet sich in Bereitschaftsstellung und alle darauf folgenden Klinkenhebel 4.2 bis 4.5 in ihren Ruhestellungen innerhalb der U-förmigen Schiene 3. Beim Befüllen der Stapelsäule 1 werden die Lagergüter in Richtung des Pfeiles 19 zugeführt. Um die Führung der Lagergüter beim Einführen zu erleichtern ist an der Stapelsäule 1 ein Einweisblech 20 angebracht, das in der Zeichnung nur in Fig. 3 dargestellt ist und in den anderen Figuren aus Gründen der Übersichtlichkeit weggelassen wurde. Das Einweisblech 20 bildet dabei gleichzeitig eine Schutzabdeckung für das Riegelblech 15.

Beim Einführen des ersten in der Zeichnung nur angedeuteten Lagergutes 22.1 stößt dieses am Ende auf den Tragarm 21.1 des Klinkenhebels 4.1 und bewegt diesen von der in Fig. 1 dargestellten Ruhestellung in seine in Fig. 2 dargestellte Arbeitsstellung. Dabei wird der zweite Klinkenhebel 4.2 über die Zuglasche 6.1 in Bereitschaftsstellung bewegt und ist zur Aufnahme des nächsten Lagergutes 22.2 bereit. Wenn die Arbeitsstellung des Klinkenhebels 4.1 erreicht ist, wird der Querbolzen 8.1 von der Feder 14 in seine Verriegelungslage in die Hinterschneidung 13.1 gezogen und verriegelt so den Klinkenhebel 4.1 in der Arbeitsstellung. Dieser Vorgang wiederholt sich fortlaufend, bis die Stapelsäule 1, wie in Fig. 2 dargestellt, vollständig mit Lagergütern 22.1 bis 22.5 gefüllt ist und alle Klinkenhebel 4.1 bis 4.5 verriegelt sind. Dabei ist zu beachten, daß die mit einem Lagergut belegten Klinkenhebel auch dann in ihren Arbeitsstellungen verriegelt sind, wenn die Stapelsäule nicht vollständig gefüllt sein sollte.

Zur Entnahme der Lagergüter 22.1 bis 22.5 wird das Riegelblech 15 in die in Fig. 4 dargestellte Entriegelungsposition gebracht, bei der die Gestaltung des Riegelblechs 15 die Kontur der Kulissen 12.1 bis 12.5 in dem die Hinterschneidungen 13.1 bis 13.5 aufweisenden Endbereich derart ergänzt, daß die Querbolzen 8.1 bis 8.5 gegen die Kraft der Feder 14 aus den Hinterschneidungen 13.1 bis 13.5 herausgehoben und damit wieder freigegeben werden. Durch das Verschieben des Riegelblechs 15 werden also alle Klinkenhebel 4.1 bis 4.5 gleichzeitig entriegelt.

Nun kann das zuletzt zugeführte Lagergut 22.5 entnommen werden, wobei dann der Klinkenhebel 4.5 von der Arbeitsstellung in die Bereitschaftsstellung schwenkt. Bei der Entnahme des nächsten Lagergutes 22.4 erfolgt wiederum ein Verschwenken des Klinkenhebels 4.4 in die Bereitschaftsstellung und gleichzeitig durch die Steuerung der Klinkenhebel mittles der Zuglaschen 6.1 bis 6.4 ein Verschwenken des Klinkenhebels 4.5 in die Ruhestellung. In der in Fig. 4 dargestellten Situation befinden sich nur noch die Lagergüter 22.1 und 22.2. in der Stapelsäule 1 und damit die Klinkenhebel 4.1 und 4.2 in Arbeitsstellung, Klinkenhebel 4.3 in Bereitschaftsstellung und die übrigen Klinkenhebel 4.4 bis 4.5 in Ruhestellung.

Nach der Entnahme des letzten Lagergutes 22.1 aus der Stapelsäule 1 wird das Riegelblech 15 wieder in die Verriegelungsposition verschoben, so daß sich wieder die in Fig. 1 dargestellte Situation ergibt und die Stapelsäule zum Befüllen bereit ist.

Daneben ist auch eine einzelne Entriegelung jedes Klinkenhebels möglich, indem das Riegelblech 15 vor jeder Entnahme eines Lagergutes von der Verriegelungsposition in die Entriegelungsposition und unmittelbar anschließend wieder in die Verriegelungsposition verschoben wird. Ausgehend von der vollständig gefüllten Stapelsäule 1, wie in Fig. 2 dargestellt, würde also zunächst das Lagergut 22.5 entnommen. Dabei verbleibt der Klinkenhebel 4.5 wegen der Verriegelung in seiner Arbeitsstellung. Dann erfolgt ein Verschieben des Riegelblechs 15 von der Verriegelungsposition in die Entriegelungsposition und wieder in die Verriegelungsposition, wobei der unbelastete klinkenhebel 4.5 entriegelt wird und in seine Bereitschaftsstellung schwenkt, während die noch mit Lagergütern 22.1 bis 22.4 gefüllten Klinkenhebel 4.1 bis 4.4 inihren Arbeitsstellungen verbleiben und anschließend wieder verriegelt sind.

Es versteht sich, daß die Erfindung nicht auf das beschriebene Ausführungsbeispiel beschränkt ist. Beispielsweise könnte die Stapelsäule 1 auch in beliebiger anderer Einbaulage in Lager- und Transportbehältern für Lagergüter verwendet werden. Die Steuerung der Klinkenhebel ist dabei nicht nur über Zuglaschen denkbar, sondern könnte auch über Steuerarme erfolgen, die an den Klinkenhebeln vorgesehen sind. Die Vorspannung der Klinkenhebel in Richtung der Ruhestellung und der Querbolzen in Richtung der Verriegelungslage könnte auch über die Schwerkraft erfolgen, wobei dann gegebenenfalls zusätzliche Gewichte anzubringen wären.

## Patentansprüche

1. Stapelsäule zum Lagern oder Transportieren von Lagergütern mit einer Seitenwand und Klinkenhebeln, wobei an den Klinkenhebeln angeordnete Querbolzen in in der Seitenwand vorgesehene und die möglichen Schwenkbewegungen der Klinkenhebel begrenzende Kulissen eingreifen,
**dadurch gekennzeichnet, daß**
die Kulissen (12.1 - 12.5) an dem der Arbeitsstellung der Klinkenhebel (4.1 - 4.5) entsprechenden Ende Hinterschneidungen (13.1 - 13.5) aufweisen und die Querbolzen (8.1 - 8-5) in der Arbeitsstellung der Klinkenhebel (4.1 - 4.5) unter einer Vorspannkraft stehend in die Hinterschneidungen (13.1 - 13.5) eingreifen.

2. Stapelsäule nach Anspruch 1, **dadurch gekennzeichnet, daß** die Vorspannkraft von der Gewichtskraft des Querbolzens (8.1 - 8.5) erzeugt ist.

3. Stapelsäule nach Anspruch 1, **dadurch gekennzeichnet, daß** die Vorspannkraft von einer Feder (14) erzeugt ist.

4. Stapelsäule nach mindestens einem der vorhergehenden Ansprüche, **dadurch gekennzeichnet, daß** zur Steuerung der Klinkenhebel (4.1 - 4.5) Zuglaschen (6.1 - 6.5) vorgesehen sind und die Querbolzen (8.1 - 8.5) gleichzeitig als Zuglaschenbolzen ausgebildet sind.

5. Stapelsäule nach mindestens einem der vorhergehenden Ansprüche, **dadurch gekennzeichnet, daß** ein verschiebbares Riegelblech (15) vorgesehen ist, das die Konturen der Kulissenen (12.1 - 12.5) zumindest in den die Hinterschneidungen (13.1 - 13.5) aufweisenden Endbereichen ergänzt.

## Claims

1. Stacking column for storage or transport of articles to be stored, with a side wall and latch levers, wherein transverse pins arranged at the latch levers engage in gate guides, which are provided in the side wall and which limit the possible pivot movements of the latch levers, **characterised in that** the gate guides (12.1 - 12.5) have undercuts (13.1 - 13.5) at the ends corresponding with the working setting of the latch levers (4.1 - 4.5) and the transverse pins (8.1 - 8.5) in the working setting of the latch levers (4.1 - 4.5) engage in the undercuts (13.1 - 13.5) to be disposed under a biasing force.

2. Stacking column according to claim 1, **characterised in that** the biasing force is produced by the weight force of the transverse pin (8.1 - 8.5).

3. Stacking column according to claim 1, **characterised in that** the biasing force is produced by a spring (14).

4. Stacking column according to at least one of the preceding claims, **characterised in that** pull straps (6.1 - 6.5) for control of the latch levers (4.1 - 4.5) are provided and the transverse pins (8.1 - 8.5) are constructed at the same time as pull strap pins.

5. Stacking column according to at least one of the preceding claims, **characterised in that** a displaceable locking plate (15) is provided, which supplements the profiles of the gate guides (12.1 - 12.5) at least in the end regions having the undercuts (13.1 - 13.5).

## Revendications

1. Colonne de gerbage pour stocker ou transporter des produits stockés, avec une paroi latérale et des leviers à cliquet, des axes transversaux disposés sur les leviers à cliquet s'insérant dans des coulisses prévues dans la paroi latérale et limitant les mouvements de pivotement possibles du levier à cliquet,
**caractérisée par le fait que**
les coulisses (12.1 à 12.5) présentent, à l'extrémité correspondant à la position de travail des leviers à cliquet (4.1 à 4.5), des contre-dépouilles (13.1 à 13.5), et les axes transversaux (8.1 à 8.5) s'insèrent dans les contre-dépouilles (13.1 à 13.5) dans la position de travail des leviers à cliquet (4.1 à 4.5) sous l'action d'une force de pré-tension.

2. Colonne de gerbage selon la revendication 1, **caractérisée par le fait que** la force de pré-tension est produite par le poids de l'axe transversal (8.1 à 8.5).

3. Colonne de gerbage selon la revendication 1, **caractérisée par le fait que** la force de pré-tension est produite par un ressort (14).

4. Colonne de gerbage selon au moins l'une quelconque des revendications précédentes, **caractérisée par le fait que**, pour commander les leviers à cliquet (4.1 à 4.5), il est prévu des pattes de traction (6.1 à 6.5) et les axes transversaux (8.1 à 8.5) sont formés en même temps comme des axes de pattes de traction.

5. Colonne de gerbage selon au moins l'une quelconque des revendications précédentes, **caractérisée par le fait qu'**il est prévu une tôle de verrouillage déplaçable (15) qui complète les contours des coulisses (12.1 à 12.5) au moins dans les zones d'extrémité présentant les contre-dépouilles (13.1 à 13.5).
